# EUROPEAN PATENT APPLICATION

(11) **EP 3 382 615 A1**
(43) Date of publication of application: **03.10.2018**
(21) Application number: 16868553.5
(22) Date of filing: 22.11.2016
(51) Int. Cl.: G06Q 10/02

(54) **RESERVATION PROCESSING DEVICE, RESERVATION PROCESSING METHOD, AND RESERVATION PROCESSING PROGRAM**

(30) Priority: 27.11.2015 JP 2015232130
(71) Applicant: Recruit Holdings Co., Ltd., Tokyo 104-0061 (JP)
(72) Inventor: YUMIBA, Hirotsugu, Tokyo 100-6640 (JP)
(74) Representative: EIP
(86) International application number: PCT/JP2016/084598
(87) International publication number: WO 2017/090610

(57) **Abstract**

A plurality of events provided respectively by providers of different industry types or different business types is presented to be capable of being reserved together. Reservable event information 223 in which information regarding an event which is provided by each of providers of different industry types or different business types and is a target of a reservation is stored, and a keyword-expanding dictionary 225 in which one association keyword or more associated with an assumption keyword when searching a reservation is stored in association with an assumption keyword assumed to be input by a reservation applicant are provided. A reservation processing module 221 receives an input of one keyword or more, extracts an association keyword corresponding to the received keyword from stored association keywords, specifies a plurality of events capable of being reserved from pieces of stored reservable event information, based on the extracted association keyword, and presents the plurality of specified events as events capable of being reserved together to the reservation applicant.

## Description

### Cross-Reference to Related Applications

This application is based on Japanese Patent Application No. 2015-232130 filed on November 27, 2015, the contents of which are incorporated herein by reference.

### Technical Field

The present invention relates to a reservation processing device, a reservation processing method, and a reservation processing program.

### Background Art

Generally, a reservation system in the related art is constructed for each provider who provides services, and reservation for events of the provider is accepted. Patent Document 1 discloses a reservation system for a driving school. In the reservation system, reservation for a lesson of the driving school is accepted.

### Citation List

### Patent Document

Patent Document 1: Japanese Patent Application Laid-Open No. 2002-56106

### Summary

In the reservation system disclosed in Patent Document 1, an event of the driving school is capable of being reserved, but it is not possible to reserve an event other than the event of the driving school. However, for example, in a case where a person thinks that the person wants to eat at a restaurant after taking a lesson at the driving school, being capable of reserving the lesson of the driving school and the restaurant at once is convenient.
To solve the above-described problem, one object of the present invention is to provide a reservation processing device, a reservation processing method, and a reservation processing program in which a plurality of events provided respectively by providers of different industry types or different business types is capable of being reserved together.

According to an aspect of the present invention, a reservation processing device includes means for storing reservable event information regarding an event which is provided by each of providers of different industry types or different business types and is a target of a reservation, means for storing one association keyword or more which are associated with an assumption keyword assumed to be input by a reservation applicant who makes a reservation, when searching a reservation, means for receiving an input of one keyword or more from the reservation applicant, means for extracting the one association keyword or more corresponding to the received keyword, from stored association keywords for each keyword, means for being capable of specifying a plurality of events which is capable of being reserved and is provided by providers of a plurality of industry types or business types, from pieces of stored reservable event information based on the extracted association keyword, and means for further specifying a plurality of events capable of being reserved together from the plurality of specified events and presenting the specified events to the reservation applicant.

The presenting means may arrange the plurality of the specified events in time series based on a provision time of the event, which is included in the reservable event information, and further specify the plurality of events capable of being reserved together from the plurality of the specified events, based on provision times and provision places of the events, which are included in the pieces of reservable event information, and a travel time required to move between provision places.

The means for specifying the reservable event information specifies the plurality of events for each extracted association keyword.

The stored association keyword may be generated based on association registration information which is information registered in association with the event by the provider and/or the reservation applicant. The stored association keyword may be generated by extracting a keyword associated with the assumption keyword, from the association registration information.

The means for presenting the event may present the events by displaying the plurality of the specified events in time series.

The reservation processing device may further include means for accepting reservations for the plurality of presented events.

The reservation processing device may further include means for managing the accepted reservations for the plurality of events, as one integrated reservation.

According to another aspect of the present invention, a reservation processing method executed by a reservation processing device includes a step of receiving an input of one keyword or more from a reservation applicant who makes a reservation, a step of extracting one association keyword or more corresponding to the received keyword from a storage device that stores the one association keyword or more associated with an assumption keyword assumed to be input by the reservation applicant, when searching the reservation, for each keyword, a step of being capable of specifying a plurality of events which is capable of being reserved and is provided by providers of a plurality of industry types or business types, from pieces of reservable event information stored in the storage device that stores the reservable event information regarding an event which is provided by each of providers of different industry types or different business types and is a target of a reservation, based on the association keyword extracted in the extracting step, and a step of further specifying a plurality of events capable of being reserved together, based on the plurality of specified events and presenting the specified events to the reservation applicant.

According to still another aspect of the present invention, a reservation processing program causes a computer to function as means for storing reservable event information regarding an event which is provided by each of providers of different industry types or different business types and is a target of a reservation, means for storing one association keyword or more which are associated with an assumption keyword assumed to be input by a reservation applicant who makes a reservation, when searching a reservation, means for receiving an input of one keyword or more from the reservation applicant, means for extracting the association keyword corresponding to the received one keyword or more, from stored association keywords for each keyword, means for being capable of specifying a plurality of events which is capable of being reserved and is provided by providers of a plurality of industry types or business types, from pieces of stored reservable event information based on the extracted association keyword, and means for further specifying a plurality of events capable of being reserved together from the plurality of specified events and presenting the specified events to the reservation applicant.

### Advantageous Effects of Invention

According to the disclosure, it is possible to present a plurality of events provided respectively by providers of different industry types or different business types so as to be capable of being reserved together.

### Brief Description of Drawings

Fig. 1 is a diagram illustrating a configuration of a reservation processing system including a reservation processing server according to an embodiment.
Fig. 2 is a diagram illustrating a configuration of the reservation processing server illustrated in Fig. 1.
Fig. 3 is a diagram illustrating a data configuration of a keyword-expanding dictionary illustrated in Fig. 2.
Fig. 4 is a flowchart illustrating procedure when a plurality of events is presented as candidates for events capable of being reserved together and reservations for the plurality of events are managed as one integrated reservation.

### Description of Embodiments

Hereinafter, an embodiment of the present invention will be described in detail with reference to the drawings. The same components are denoted by the same reference signs and descriptions thereof will not be repeated.

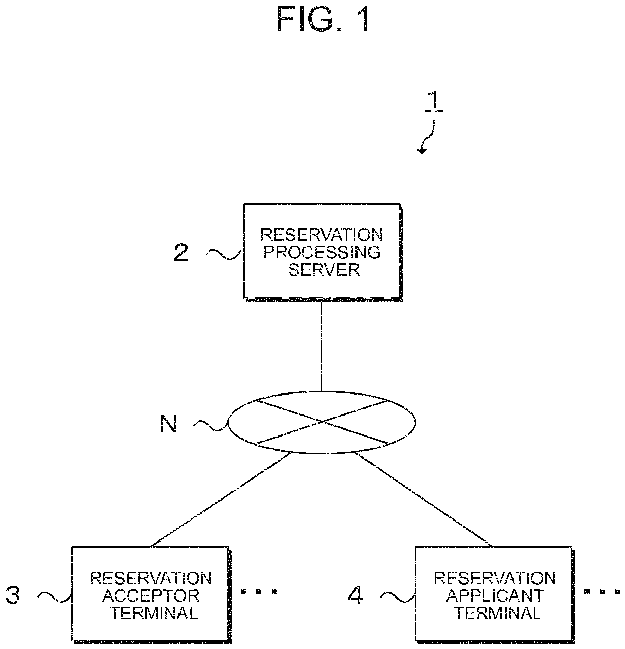

Fig. 1 is a schematic diagram illustrating a configuration of a reservation processing system including a reservation processing server (reservation processing device) according to an embodiment of the present invention. As illustrated in Fig. 1, a reservation processing system 1 in the embodiment includes a reservation processing server 2, one or more reservation acceptor terminals 3, and one or more reservation applicant terminals 4. Each of the reservation acceptor terminals 3 and the reservation applicant terminals 4 is configured to be capable of communicating with the reservation processing server 2 through a network N.

The reservation acceptor terminal 3 is a terminal device used by a provider who provides a service, as a reservation acceptor who accepts a reservation for an event which will be described later. Regarding the provider which may act as the reservation acceptor, providers of all industry types or all business types are set as a target.

The reservation applicant terminal 4 is a terminal device used by a user who receives the provided service, as a reservation applicant who makes a reservation for an event.

As the event, anything which is capable of serving as a target of a reservation may be provided. As an example, an event is capable of being specified by reservable event information which is generated by setting a reservation frame. Details of the reservable event information will be described later. A method of setting the reservation frame may be determined in accordance with the reservation acceptance type, for example. As an example of the reservation acceptance type, a preset type and a free acceptance type which will be described later may be employed. As the reservation acceptance type, other types may be provided, and any type may be employed.

The preset type means a type in which a reservation from a reservation applicant is accepted by using a reservation frame which has been set in advance by a reservation acceptor. The free acceptance type means a type in which a reservation from a reservation applicant is accepted by causing a reservation applicant to set a desired reservation frame within a service provision time set by a reservation acceptor.

Before the reservation frame is set, a reservation acceptor registers items as follows, for example: a menu item for specifying the contents of a service provided by the reservation acceptor; a resource item as a resource (for example, person, equipment, furniture, and the like) when a service is provided; an item of a resource group to which the resource is capable of belonging; a reservation capacity number item; a reservation acceptance availability date item; and a charge item.

In the preset type, for example, the reservation frame is set in a manner that the reservation acceptor sets a menu item and a time zone in which a service corresponding to the menu item is provided.

In the free acceptance type, for example, the reservation frame is set in a manner that the reservation acceptor sets a service provision time and the reservation applicant designates a desired time zone in a service provision time.

In the embodiment, descriptions will be made on the assumption that a personal computer (PC) is set as the reservation acceptor terminal 3 and the reservation applicant terminal 4. However, the invention is not limited thereto. As the reservation acceptor terminal 3 and the reservation applicant terminal 4, for example, a notebook PC, a tablet terminal, a smartphone, a portable phone, a portable information terminal (PDA), and other terminal devices may be appropriately used.

For example, the reservation processing server 2 is configured by a computer having high operation processing power. The reservation processing server 2 realizes a server function by a predetermined server program operating in the computer. Here, the number of computers constituting the reservation processing server 2 is not necessarily one. The reservation processing server 2 may be configured by a plurality of computers distributed over the network N.

The network N includes a communication network which enables information to be transmitted and received between the reservation processing server 2, the reservation acceptor terminal 3, and the reservation applicant terminal 4. As the network N, for example, any of the Internet, a LAN, a private line, a telephone line, a corporate network, a mobile communication network, Bluetooth (registered trademark), WiFi (Wireless Fidelity), other communication lines, and combinations thereof may be used. The network N may be wired or wireless.

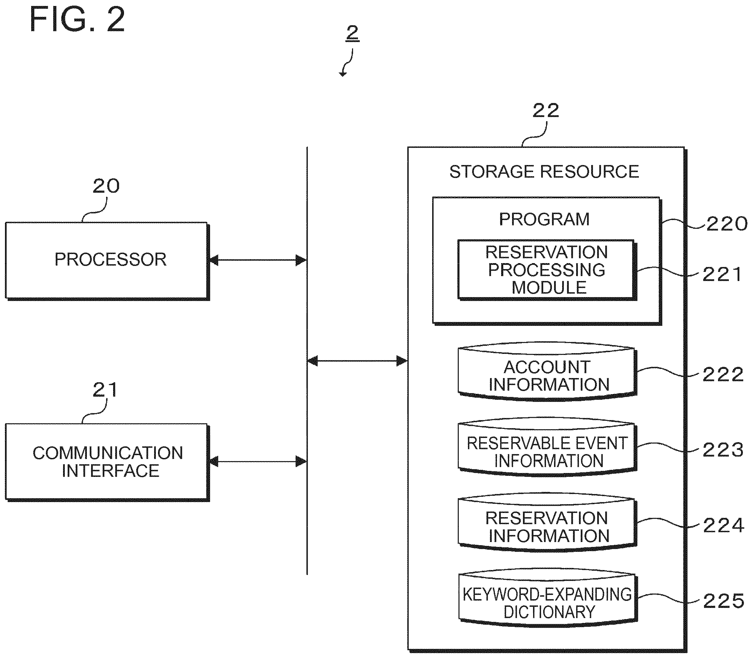

As illustrated in Fig. 2, the reservation processing server 2 includes a processor 20, a communication interface 21, and a storage resource 22, for example.

The processor 20 is configured by an arithmetic logic unit that processes an arithmetic operation, a logical operation, a bit operation, and the like, and various registers. The processor 20 realizes various functions which will be described later, by executing a computer program 220 stored in the storage resource 22. The various registers include, for example, a program counter, a data register, a command register, a general-purpose register, and the like.

The communication interface 21 is a hardware module which is connected to the network N and is used for communicating with other terminals on the network N. The communication interface 21 is, for example, a modulator-demodulator such as an ISDN modem, an ADSL modem, a cable modem, an optical modem, and a soft modem.

The storage resource 22 is, for example, a logical device provided by a storage area of a physical device. The physical device is, for example, a computer-readable recording medium such as a disk drive or a semiconductor memory. The storage resource 22 may be constructed by mapping a plurality of physical devices on one logical device or may be constructed by mapping one physical device on a plurality of logical devices. The computer program 220 is stored in the storage resource 22.

An operating system program, a driver program, various types of data, and the like used in processing of the reservation processing server 2 are stored in the storage resource 22 in addition to the computer program 220. Examples of the driver program include a communication interface driver program for controlling the communication interface 21, for example.

As the various types of data, for example, the following are provided: account information 222 regarding an account of a reservation acceptor, which is registered by a reservation acceptor; reservable event information 223 regarding an event as a target of a reservation registered by the reservation acceptor; reservation information 224 regarding reservation details registered by the reservation applicant; and a keyword-expanding dictionary 225 for expanding a keyword input by the reservation applicant to a plurality of keywords.

The account information 222 includes, for example, a user ID item, a password item, a mail address item, a name item, an industry type and business type item, and the like, as data items. The user ID item stores identification information for specifying a reservation acceptor as a provider. The industry type and business type item stores information of specifying an industry type or business type of the reservation acceptor as the provider.

The reservable event information 223 includes, for example, a user ID item, an event ID item, a category item, a provision place item, a provision time item, a charge item, a person-in-charge item, a supplementary explanation item, and the like, as data items. The user ID item is similar to the user ID item of the account information 222. The account information 222 and the reservable event information 223 are capable of being associated with each other by the user ID item.

The event ID item stores, for example, event identification information for specifying an event, such as an event name or an event number. The category item stores information for specifying the category of the event. The category of the event is capable of being provided for each industry type or each business type, or for each type of a provision target. Specifically, a food and beverage establishment, a hospital, a school, a fitness center, a beauty salon, types of food (for example, tempura-soba or zaru-soba to be served at a soba restaurant) served at a food and beverage establishment, and the like correspond to the category of the event. A plurality of classes may be randomly provided in each category. For example, in a case where the category is a food and beverage establishment, restaurants, cafes, pubs, and the like may be provided as lower classes of the food and beverage establishment. A Japanese style, a Chinese style, a Western style, and the like may be provided as lower classes of the restaurants. Further, sushi restaurants, soba restaurants, tempura restaurants, and the like may be provided as lower classes of the Japanese style.

The provision place item stores information for specifying a provision place of the event. The provision time item stores a provision time of the event. The charge item stores the charge for the event. The person-in-charge item stores information for specifying a person in charge on a provider side who provides the event. The supplementary explanation item stores supplementary explanations for the event, and the like.

The reservation information 224 includes, for example, a reservation ID item, an event ID item, a reservation detail item, a reservation applicant item, a memo item, and the like, as data items. The reservation ID item stores identification information for specifying a reservation made by the reservation applicant. The event ID item is an item similar to the event ID item of the reservable event information 223. The reservable event information 223 and the reservation information 224 are capable of being associated with each other by the event ID item.

The reservation detail item stores, for example, information regarding the reservation details such as the number of reserved persons, a reserved course, and a reserved time. The reservation applicant item stores, for example, reservation applicant information which is information regarding a reservation applicant, such as the name, the address, and the contact point of the reservation applicant. The memo item stores information of an evaluation of the reservation applicant for a reservation, such as a word of mouth, a memorandum on the reservation, and the like.

A combination of data items included in the account information 222, the reservable event information 223, and the reservation information 224 which are described above is just an example. The combination of the data items is capable of being appropriately changed in accordance with an operating system.

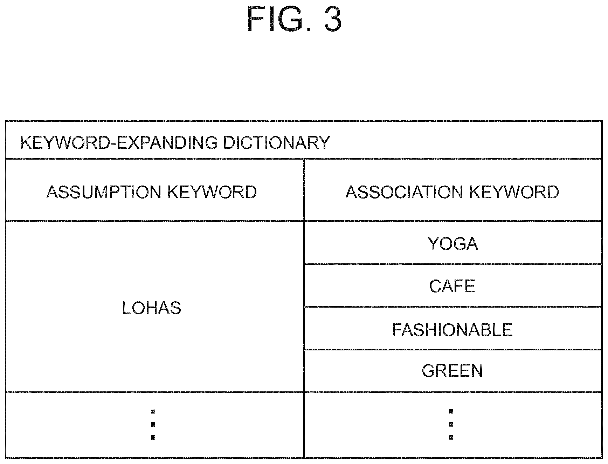

As illustrated in Fig. 3, for example, the keyword-expanding dictionary 225 includes an assumption keyword item and an association keyword item as the data items.

The assumption keyword item stores a keyword (assumption keyword) assumed to be input by the reservation applicant. The assumption keyword may be set by analyzing an input history including a keyword and the like which have been previously input by the reservation applicant and extracting an appropriate word from the input history.

The association keyword item stores a keyword (association keyword) assumed to be associated with the assumption keyword and be input when searching a reservation. The association keyword may be set, for example, in a manner that the reservable event information 223 registered by the reservation acceptor, the reservation information 224 registered by the reservation applicant, and the like are analyzed, an appropriate word is extracted from the reservable event information and the reservation information, and a group is made for each assumption keyword. Here, the reservable event information and the reservation information correspond to association registration information which is registered by the reservation acceptor and the reservation applicant in association with an event.

As an example, it is assumed that, if the assumption keyword is "LOHAS", for example, words such as "yoga", "cafe", "fashionable", and "green" are extracted as a word associated with "LOHAS" when searching a reservation. In this case, a word group of the words is formed. As illustrated in Fig. 3, the word group is registered in the keyword-expanding dictionary 225, as association keywords of "LOHAS".

The computer program 220 is a program for performing predetermined processing. The computer program includes a plurality of software modules which is appropriately called and executed during an operation of the main program of the reservation processing server 2. The software module is a subprogram modularized for performing specific processing. For example, the software module is created by using a procedure, a subroutine, a method, a function, a data structure, and the like.

For example, the computer program 220 includes a reservation processing module 221. A function realized by executing the reservation processing module 221 will be described below.

The reservation processing module 221 receives an account registration of a reservation acceptor as a provider. When the reservation acceptor starts using the reservation processing system 1, the reservation acceptor operates the reservation acceptor terminal 3 to access a predetermined Web page of the reservation processing server 2, and registers account information 222 of the reservation acceptor.

The reservation processing module 221 registers reservable event information 223 regarding an event as a target of a reservation, for the reservation acceptor who has performed the account registration.

The reservation processing module 221 receives one keyword or more input by the reservation applicant, from the reservation applicant terminal 4. Here, the keyword is a word for narrowing down events to be reserved by the reservation applicant. The keyword is not limited to nouns and may be verbs, adjectives, or the like. When the reservation applicant reserves an event, the reservation applicant operates the reservation applicant terminal 4 to access a predetermined Web page of the reservation processing server 2 and inputs any keyword.

The reservation processing module 221 extracts one association keyword or more corresponding to the keyword received from the reservation applicant terminal 4, with reference to the keyword-expanding dictionary 225, for each received keyword.

The reservation processing module 221 specifies a plurality of events capable of being reserved together by the reservation applicant, with reference to the reservable event information 223 based on the extracted association keyword. The plurality of events capable of being reserved together is capable of being specified in a manner as follows, for example.

Firstly, reservable events are arranged in time series, based on the provision time of the reservable event information 223 extracted for each association keyword. A plurality of events capable of being reserved together is specified from a plurality of events which has been arranged in time series, based on the provision time and the provision place of the reservable event information 223 and a travel time required to move between provision places. When the travel time is calculated, the travel time may be calculated on the premise that moving means (for example, train, bus, car, or walking) which causes the travel time to be the shortest is used, or the travel time may be calculated on the premise that moving means selected by the reservation applicant is used.

The reservation processing module 221 presents candidates for the events capable of being reserved together to the reservation applicant who operates the reservation applicant terminal 4 by displaying candidates for the events capable of being reserved together on a screen of the reservation applicant terminal 4. A plurality of events included in one candidate is displayed to be arranged in time series. In a case where a plurality of candidates to be displayed is provided, a list of the plurality of candidates as choices may be displayed, and a candidate selected from the list by the reservation applicant may be displayed.

In a case where the reservation processing module accepts reservations for the plurality of events presented to the reservation applicant, from the reservation applicant terminal 4, the reservation processing module 221 manages the accepted reservations for the plurality of events, as one integrated reservation. Specifically, the reservation processing module 221 assigns a common reservation ID to pieces of information regarding the reservations for the plurality of events and integrates the pieces of information. The reservation processing module stores an information group obtained by the integration, as the reservation information 224, in the storage resource 22 of the reservation processing server 2. At this time, individual reservation IDs which respectively correspond to the events may be assigned in addition to the common reservation ID.

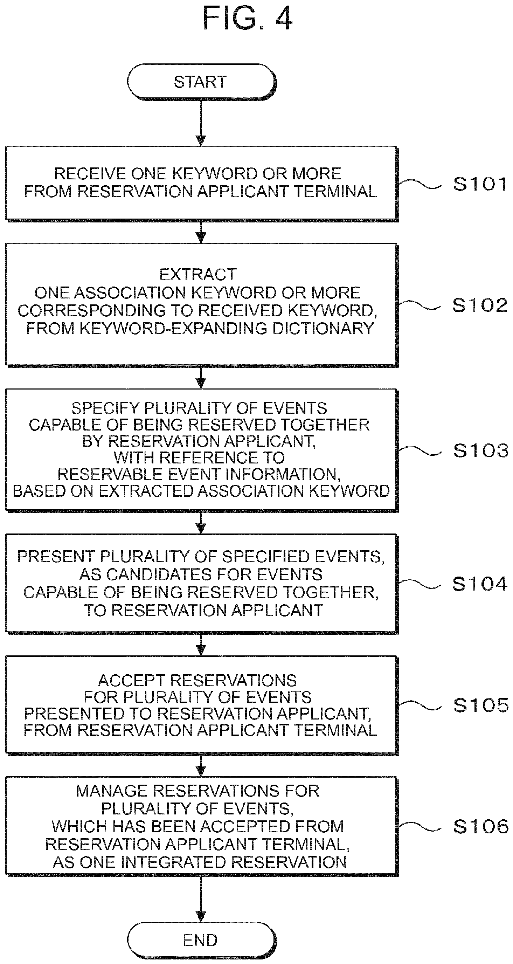

Procedures when a plurality of events is presented as candidates for events capable of being reserved together and reservations for the plurality of events are managed as one integrated reservation will be described with reference to Fig. 4.

Firstly, the reservation processing module 221 receives one keyword or more input by the reservation applicant, from the reservation applicant terminal 4 (Step S101).

The reservation processing module 221 extracts one association keyword or more corresponding to the keyword received in Step S101, from the keyword-expanding dictionary 225 (Step S102).

The reservation processing module 221 specifies a plurality of events capable of being reserved together by the reservation applicant, with reference to the reservable event information 223, based on the association keyword extracted in Step S102 (Step S103).

The reservation processing module 221 presents the plurality of events specified in Step S103, as candidates for events capable of being reserved together, to the reservation applicant (Step S104).

The reservation processing module 221 accepts reservations for the plurality of events presented to the reservation applicant in Step S104, from the reservation applicant terminal 4 (Step S105).

The reservation processing module 221 manages the reservations for the plurality of events, which have been accepted from the reservation applicant terminal 4 in Step S105, as one integrated reservation (Step S106).

As described above, according to the reservation processing system 1 in the embodiment, the reservable event information 223 in which information regarding an event which is provided by each of providers of different industry types or different business types and is a target of a reservation is stored, and the keyword-expanding dictionary 225 in which one association keyword or more associated with the assumption keyword when searching a reservation is stored in association with the assumption keyword assumed to be input by the reservation applicant are capable of being stored in the storage resource 22. In addition, in a case where an input of one keyword or more is received from the reservation applicant terminal 4, the association keyword corresponding to the keyword received from the reservation applicant terminal 4 is capable of being extracted among association keywords in the keyword-expanding dictionary 225, a plurality of events which is respectively provided by providers of a plurality of industry types or business types and is capable of being reserved is capable of being specified from the reservable event information 223 based on the extracted association keyword, and the plurality of specified events is capable of being presented to the reservation applicant as events capable of being reserved together.

Thus, according to the reservation processing system 1 in the embodiment, a plurality of events provided respectively by providers of different industry types or different business types is capable of being presented such that the reservation applicant is capable of reserving the plurality of events together. Thus, according to the reservation processing system 1 in the embodiment, reservations for events distributed over a plurality of industry types or business types are capable of being collectively and intensively processed in reservation processing.

Further, according to the reservation processing system 1 in the embodiment, reservations for a plurality of events presented to the reservation applicant are capable of being accepted and the accepted reservations for the plurality of events are capable of being managed as one integrated reservation.

### [Modification Example]

The present invention is not limited to the above-described embodiment and may be implemented in other various forms in a range without departing from the gist of the present invention. Therefore, the embodiment is just an example in all aspects and is not interpreted restrictively. For example, the order of the above-described processes (steps) may be randomly changed in a range in which inconsistencies do not occur in the process details, and the processes (steps) may be performed in parallel.

In the above-described embodiment, the reservation processing server 2 includes the keyword-expanding dictionary 225. However, it is not necessary that the reservation processing server includes the keyword-expanding dictionary. As an embodiment in which the reservation processing server 2 does not include the keyword-expanding dictionary 225, for example, forms of (1) to (3) as follows are provided.
(1) Form in which keyword-expanding dictionary is provided in external server.
   In this case, for example, the reservation processing server 2 may transmit a keyword input by a user, to the external server and acquire one association keyword or more associated with the keyword, from the external server.
(2) Form in which keyword-expanding dictionary is not provided anywhere and association keyword is acquired from external server.
   In this case, for example, the reservation processing server 2 may acquire the association keyword in a manner that the reservation processing server 2 transmits a keyword input by a user, to the external server, the external server extracts the association keyword from information based on the keyword (which may be information acquired from the network by keyword search or information associated with a keyword which has been stored in advance), and then the reservation processing server 2 receives the extracted association keyword from the external server.
(3) Form in which keyword-expanding dictionary is not provided anywhere and association keyword is acquired by extracting association keyword from information acquired from network by keyword search.
   In this case, for example, the reservation processing server 2 may acquire the association keyword in a manner that the reservation processing server 2 performs keyword search with a keyword input by a user and extracts the association keyword from information acquired from the network.

In the above-described embodiment, the reservation acceptor terminal 3 or the reservation applicant terminal 4 accesses a Web page of the reservation processing server 2 and performs processing. However, it is not necessary that the terminal accesses the Web pages and performs the processing. For example, the reservation acceptor terminal 3 or the reservation applicant terminal 4 may install a reservation processing application, and thus realize the various functions in the above-described reservation processing system. In this case, the reservation acceptor terminal 3 or the reservation applicant terminal 4 may acquire the latest reservable event information or reservation information from the reservation processing server 2, perform reservation processing and the like by using the acquired latest information, and transmit data processed in the reservation acceptor terminal 3 or the reservation applicant terminal 4, to the reservation processing server 2.

The program in the embodiment may be installed or loaded on a computer by being downloaded through various recording media (computer-readable recording media) such as an optical disk (for example, a CD-ROM), a magnetic disk, and a semiconductor memory or via a communication network or the like.

### Industrial Applicability

The reservation processing device, the reservation processing method, and the reservation processing program according to the present invention are suitable for presenting a plurality of events respectively provided by providers of different industry types or different business types, so as to be capable of being reserved together.

### Reference Signs List

1...reservation processing system, 2...reservation processing server, 3...reservation acceptor terminal, 4...reservation applicant terminal, 20...processor, 21...communication interface, 22...storage resource, 220...computer program, 221...reservation processing module, 222...account information, 223...reservable event information, 224...reservation information, 225...keyword-expanding dictionary, N...network

## Claims

1. A reservation processing device comprising:
means for storing reservable event information regarding an event which is provided by each of providers of different industry types or different business types and is a target of a reservation;
means for storing one association keyword or more which are associated with an assumption keyword assumed to be input by a reservation applicant who makes a reservation, when searching a reservation;
means for receiving an input of one keyword or more from the reservation applicant;
means for extracting the one association keyword or more corresponding to the received keyword, from stored association keywords, for each keyword;
means for being capable of specifying a plurality of events which is capable of being reserved and is provided by providers of a plurality of industry types or business types, from pieces of the stored reservable event information based on the extracted association keyword; and
means for further specifying a plurality of events capable of being reserved together based on the plurality of specified events and presenting the specified events to the reservation applicant.

2. The reservation processing device according to claim 1,
wherein the presenting means arranges the plurality of the specified events in time series based on a provision time of the event, which is included in the reservable event information, and further specifies the plurality of events capable of being reserved together from the plurality of the specified events, based on provision times and provision places of the events, which are included in the pieces of reservable event information, and a travel time required to move between provision places.

3. The reservation processing device according to claim 1 or 2,
wherein the means for specifying the reservable event information specifies the plurality of events for each extracted association keyword.

4. The reservation processing device according to any one of claims 1 to 3,
wherein the stored association keyword is generated based on association registration information which is information registered in association with the event by the provider and/or the reservation applicant.

5. The reservation processing device according to claim 4,
wherein the stored association keyword is generated by extracting a keyword which is associated with the assumption keyword, from the association registration information.

6. The reservation processing device according to any one of claims 1 to 5,
wherein the means for presenting the event presents the events by displaying the plurality of the specified events in time series.

7. The reservation processing device according to any one of claims 1 to 6, further comprising:
means for accepting reservations for the plurality of presented events.

8. The reservation processing device according to claim 7, further comprising:
means for managing the accepted reservations for the plurality of events, as one integrated reservation.

9. A reservation processing method executed by a reservation processing device, the method comprising:
a step of receiving an input of one keyword or more from a reservation applicant who makes a reservation;
a step of extracting one association keyword or more corresponding to the received keyword from a storage device that stores the one association keyword or more which are associated with an assumption keyword assumed to be input by the reservation applicant, when searching the reservation, for each keyword;
a step of being capable of specifying a plurality of events which is capable of being reserved and is provided by providers of a plurality of industry types or business types, from pieces of reservable event information stored in the storage device that stores the reservable event information regarding an event which is provided by each of providers of different industry types or different business types and is a target of a reservation, based on the association keyword extracted in the extracting step; and
a step of further specifying a plurality of events capable of being reserved together, based on the plurality of specified events and presenting the specified events to the reservation applicant.

10. A reservation processing program causing a computer to function as:
means for storing reservable event information regarding an event which is provided by each of providers of different industry types or different business types and is a target of a reservation;
means for storing one association keyword or more which are associated with an assumption keyword assumed to be input by a reservation applicant who makes a reservation, when searching a reservation;
means for receiving an input of one keyword or more from the reservation applicant;
means for extracting the association keyword corresponding to the received one keyword or more, from stored association keywords for each keyword;
means for being capable of specifying a plurality of events which is capable of being reserved and is provided by providers of a plurality of industry types or business types, from pieces of stored reservable event information based on the extracted association keyword; and
means for further specifying a plurality of events capable of being reserved together based on the plurality of specified events and presenting the specified events to the reservation applicant.
